# EUROPEAN PATENT SPECIFICATION

(11) **EP 2 125 190 B1**
(45) Date of publication and mention of the grant of the patent: **16.01.2019**
(21) Application number: 07847779.1
(22) Date of filing: 04.12.2007
(51) Int. Cl.: B01J 8/18, B01J 8/24, C08F 2/34, C08F 10/00

(54) **FLUIDIZED BED REACTOR WITH GAS DISTRIBUTION GRID AND PROCESS FOR THE GAS-PHASE POLYMERISATION OF OLEFINS**
WIRBELSCHICHTREAKTOR MIT GASVERTEILUNGSPLATTE UND VERFAHREN ZUR GASPHASENPOLYMERISATION VON OLEFINEN
RÉACTEUR À LIT FLUIDISÉ AVEC GRILLE DE DISTRIBUTION DE GAZ ET PROCÉDÉ DE POLYMÉRISATION D'OLÉFINES EN PHASE GAZEUSE

(30) Priority: 20.12.2006 EP 06126686
(43) Date of publication of application: 02.12.2009
(73) Proprietor: Basell Poliolefine Italia S.r.l., 20121 Milano (IT)
(72) Inventor: RINALDI, Roberto, 46100 Mantova (IT); PENZO, Giuseppe, 46047 Montanara Di Curtatone, Mantova (IT); GOVONI, Gabriele, 44045 Renazzo (FE) (IT)
(74) Representative: Sacco, Marco
(86) International application number: PCT/EP2007/063277
(87) International publication number: WO 2008/074632

(56) References cited:
- EP-A2- 0 173 261
- DE-A1- 3 705 343
- DE-B- 1 186 832
- US-A- 3 817 696
- US-A- 4 442 796
- US-A- 4 518 750
- US-A- 5 101 742

## Description

The present invention relates to a fluidized bed reactor for olefin polymerization equipped with a gas distribution grid suitable to dispense an upward gas flow into a vessel containing a polymer in fluidized conditions.

The invention also relates to a gas-phase polymerization process carried out in such a fluidized bed reactor.

The development of catalysts with high activity and selectivity of the Ziegler-Natta type and, more recently, of the metallocene type has led to the widespread use on an industrial scale of processes in which the olefin polymerization is carried out in a gaseous medium in the presence of a solid catalyst. An example of said gas-phase polymerization processes involves the use of a fluidized bed reactor, where a bed of polymer particles is maintained in a fluidized state by the upward flow of a fluidizing gas.

During the polymerization fresh polymer is generated by catalytic polymerization of the monomers and the manufactured polymer is drawn off from the reactor to maintain the polymer bed at a constant volume. The fluidized bed, which comprises a bed of growing polymer particles and catalyst particles, is maintained in a fluidization state by the continuous upward flow of a fluidizing gas, which comprises the recycled gas stream and make-up monomers.

The fluidization of a powdered solid is an operation which is generally easily achieved by adapting the velocity of the gas stream to the size, shape and density of the powdered solid. It is desirable to have a homogeneous distribution of the fluidizing gas in the bed of fluidized solid. Industrial processes employ a distribution grid to dispense the fluidizing gas to the polymer bed, said distribution grid acting also as a support for the bed when the supply of gas is cut off. Said distribution grid is commonly provided with orifices and arranged in the lower part of the fluidized bed apparatus.

Fluidization grids more commonly used in polymerization plants have the shape of a cylindrical disk, which is perforated by a large number of through-holes allowing the passage of the fluidizing gas from the zone underlying the grid to the fluidized polymer bed. Said fluidization grid may be also integrally built together with the reactor walls.

However, it has been noticed that when the fluidized bed apparatus exceeds a certain size, the distribution of the fluidizing gas through the polymer bed tends to become less homogeneous, so that dense and poorly fluidized regions appear in the bed, particularly in the vicinity of the walls of the apparatus. The olefin polymerization is an exothermic reaction and localized hot spots inside the polymer bed may occur and lead to softening of the polymer particles and their agglomeration. This phenomenon tends to become more severe when the polymerization is operated in the so called "condensing mode", so that the fluidizing gas contains also small amounts of condensed monomers: the lack of homogeneity in the distribution of this liquid can cause adhesion or agglomeration of the solid in the fluidized bed.

Another drawback correlated with the prior art perforated grids is that the through-holes are likely to become clogged up by the deposition of polymer particles, so that the polymerization apparatus cannot be continuously operated for a long period of time. If holes with a larger size are provided, the problem of clogging will be overcome to some extent, but some polymer particles may fall through the holes in the zone underlying the grid to form deposits on the walls below the gas distributor plate. Alternatively, an increase in the distance between the holes, i.e. the holes pitch, is likely to create a region of stagnant flow between the holes with consequent hot spots and formation of polymer chunks in the zones between the holes.

To solve the above problems fluidization grids with a different shape, size, number and distribution of holes have been proposed.

Gas distributor plates provided with caps above the grid holes have been described in some patents to overcome the risk of clogging the holes of the grid during the regular polymerization runs, and especially when the polymer bed falls down, due to stop of feeding of the fluidizing recycle gas. Documents EP-B-088404 and GB 2271727 1 both describe gas distributor plates for use in a fluidised bed, in which caps are provided over the plate holes, so preventing particles dropping through the holes.

Japanese patent publication 42404/1992 discloses a gas distribution plate, in which overcaps of the shape of a roof are provided on the gas passage holes: the gas flows out from both sides of the caps. Furthermore, Japanese patent publication 284509/1989 discloses a gas distributor plate having overcaps of a shape that the outer line as viewed on a vertical cross section rises in an inclined manner so as to cover and protect the gas passage holes.

The above mentioned distributor plates provided with caps are helpful to some extent to prevent the holes from being plugged by the solid, but fail in uniformly diffusing the flow gas through the polymer bed, so that are not satisfactory from the standpoint of efficiently operating the fluidized bed polymerization process.

US 5101742 A and US 3817696 A disclose fluidized bed reactors has a gas distribution grid arranged at their base.

US 4518750 A discloses an polymerization process of α-olefins in a fluidized bed reactor comprising a gas distributor.

The disclosure of EP 173261 teaches to insert a diffusing plate at the bottom end of a fluidized bed reactor, in corresponding of the pipe adducting the gas recycle stream. Said diffusing plate improves the uniformity of the gas flow passing through the fluidization grid generating a turbulent flow in the region underlying the fluidisation grid. The design of said diffusing plate is such to divide the gas flow into two main streams, the first one directed upwardly, the second one directed sideway. However, the described embodiment has the disadvantage that the plain surfaces of the diffusing plate tend to collect fine particles entrained with the circulating gas flow, so that polymer clumps may grow on the surfaces of the diffusing plate with the high risk of partially obstructing the flow of fluidizing gas to the polymerization reactor.

EP 085610 describes a gas distributor for fluidized bed reactors consisting of an inverted cone with a conicity comprised between 50° and 120°, and provided on its lateral walls with holes for the adduction of the fluidizing gas. The apex of said inverted cone is provided with a device for the discharge of the produced polymer. A crown of further slots or orifices is laterally displaced in the upper end of this conical gas distributor, the width of said orifices being dimensioned in such a way to allow the passage of the fine particles entrained with the fluidizing gas, while at the same time to hinder the fall by gravity of the fluidized bed during interruption of the fluidization process. The fluidizing gas flows upward through a narrow interspace placed between the conical distributor and the reactor walls. The fluidization grid proposed by EP 085610 suffers from the disadvantage that said narrow interspace adducting the fluidizing gas can be easily clogged by the fines entrained with the recycled gaseous stream.

All these prior arrangements suffer from a structure being complex and difficult to be manufactured and managed. The use of a sequence of caps above the holes of the grid can give rise to a large increase in the pressure drop of the polymerization apparatus. Furthermore, the holes covered with caps may become clogged by the fines entrained with the fluidizing gas. This is particularly the case where no cyclone is used in the recycle gas line to separate the fines entrained with the gas recycle stream.

In view of above disadvantages of the prior art gas distributors, it is largely felt the need to provide a fluidization grid simple to be manufactured and capable of ensuring an optimal distribution of a gas flow inside a polymer bed, also reducing the risk of holes clogging.

It is therefore a first object of the present invention a fluidized bed reactor for the gas-phase polymerization of α-olefins, said fluidized bed reactor being equipped with a gas distribution grid arranged at its base, a gas circulation system for recycling and cooling the unreacted gas from the top of said reactor to said distribution grid, and a conduit for the continuous discharge of polymer from the reactor, characterized in that said distribution grid comprises a plurality of trays arranged to form the lateral walls of an inverted cone, said plurality of trays being attached each other to form slots in the overlapping area of adjacent trays, wherein annular modules of trays are formed by the overlapping of successive trays, and wherein said slots are formed so as to give a gas outlet which is tangential at the plane of said adjacent trays, thereby generating a whirling, cyclonic motion of the gas stream above the gas distribution grid.

The gas distribution grid comprised in the reactor of the invention is particularly suitable to distribute in a homogenous way an upward gas flow into a vessel containing a polymer in fluidized conditions. Accordingly, it is conveniently mounted at the bottom of a vessel containing polymer particles in fluidized conditions.

The grid comprises a plurality of overlapping trays, arranged in a way that the structure of the fluidization grid has substantially the shape of an inverted cone. For a best understanding of the scope of the claimed arrangement the below definitions for "gas distribution grid", "tray" and "overlapping area" are given.

The expression "gas distribution grid" indicates a grid or a plate having the function of dispensing an upward flow of gas able to maintain in fluidization conditions a polymer bed, without excluding the optional feed of a liquid together with the gas flow. As known to the skilled person in the art of olefin polymerization, the presence of little amounts of liquid monomers in the stream of fluidizing gas is generally referred to as a polymerization process operated in the "condensing mode".

The term "tray" means a flat component, like a plate or a sheet, which can be easily deformed at one of its sides to generate one or more slots when overlapped with a successive, adjacent tray.

The term "overlapping area" indicates an area where a first tray extends upon a second tray, in a way that both trays can be fixed to each other to form slots in this overlapping area.

The trays comprised in the reactor of the invention can be manufactured of any useful material able to resist at temperatures and pressures of a polymerization process. It is preferred to use steel trays, since they can be easily manufactured and mounted each other to form slots in their overlapping area. According to the invention the overlapping of successive trays generates annular modules of trays, i.e. adjacent trays are mounted each other to form a ring structure. These annular modules of trays can be radially mounted side by side to generate the entire structure of the gas distributor. Said annular modules are mounted on suitable annular supports, so that during start-up or shut-down of the reactor the gas distribution grid is also able to carry the bed of polymer particles. Said annular supports are held supported by means of bars protruding from the bottom walls of the vessel which contains the polymer in fluidization conditions.

The modules of trays are generally arranged so as to form the lateral walls of an inverted cone having an apex of from 100° to 160°, preferably from 120° to 150°. It is preferred if the cone is truncated in a way so as to form an opening allowing polymer particles being discharged from the vessel through said opening.

From two to six annular modules of trays may be employed to form the conical structure of the distribution grid, depending on the diameter of the vessel at which the gas distributor is mounted. If trays with the same surface area are used, the outer peripheral modules have to comprise a higher number of overlapping trays with respect to the inner central modules: this is a consequence of the circular cross section of the vessel or reactor containing the fluidized polymer.

Generally each annular module comprises at least 6 trays, preferably a number of trays ranging from 10 to 80. Obviously, higher is the number of trays used to form an annular module, higher is the number of slots formed on the annular module. The slots are formed by the overlapping of adjacent trays in such a way to give a gas outlet, which is tangential at the plane of the adjacent trays, as explained in detail successively with reference to the enclosed figures.

According to a preferred embodiment of the invention, in the overlapping area of adjacent trays a first tray forms the upper part of said slots, while the successive tray forms the bottom part of said slots. It is preferred to deform both trays to form the sequence of slots.

Generally, in the overlapping area of two adjacent trays a number of slots ranging from 3 to 15 slots is present. Preferably the slots are of similar size and shape.

Through the sequence of slots the fluidizing gas can flow upwardly, forced by the pressure drop existing between the inlet side and the outlet side of the distribution grid.

The gas distribution grid comprised in the reactor of present invention is now explained in detail in correlation with the attached drawings, which are representative and not limitative of the scope of the invention.
Figure 1 shows a fluidized bed reactor for the gas-phase polymerization of olefins according to the invention, said fluidized bed reactor comprising the gas distribution grid.
Figure 2a and 2b show the bottom part of the fluidised bed reactor of Fig. 1: Fig. 2a is a side elevation of the distribution grid, while Fig. 2b is a plan view of the distribution grid.
Fig. 3 shows a radial section of a single slot formed by the overlapping of two adjacent trays in the distribution grid of Figs. 2a and 2b. Fig. 4 shows a tangential section of the slot of Fig. 3.

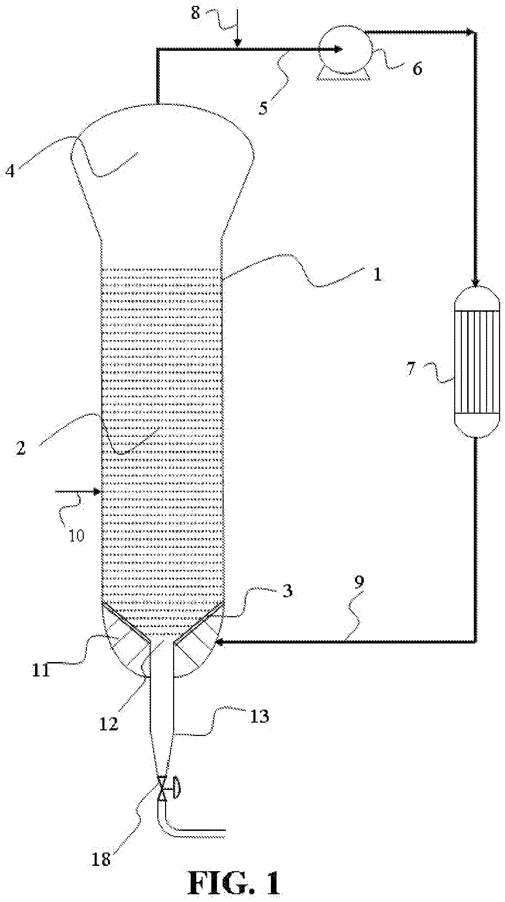

Fig. 1 shows a fluidized bed reactor 1 comprising a fluidized bed 2 of polymer, the gas distribution grid 3 comprised in the reactor of the invention, and a velocity reduction zone or disengagement zone 4, which is placed above the polymer bed 2.

The velocity reduction zone 4 is generally of increased diameter compared to the diameter of the fluidized bed portion of the reactor. The gaseous stream leaving the top of the velocity reduction zone 4 may comprise, besides the unreacted monomers, also inert condensable gases, such as propane, as well as inert non-condensable gases, such as nitrogen. Said gaseous stream is compressed, cooled and recycled to the bottom of the fluidized bed reactor: from the top of the velocity reduction zone 4 the gaseous stream is transferred via the recycle line 5 to a compressor 6 and then to a heat exchanger 7. If appropriate, the recycle line 5 is equipped with a line 8 for feeding monomers, molecular weight regulators and, optionally inert gases.

Passing through the heat exchanger 7, the gaseous stream is cooled and transferred to the bottom of the fluidized bed reactor via line 9. The recycle gas can, if appropriate, be cooled to below the dew point of one or more of the gas components, so as to operate the reactor with condensed material, i.e. in the condensed mode.

Generally, the various polymerization catalyst components are fed to the fluidized bed reactor 1 through a line 10 that is preferably placed in the lower part of the fluidized bed 2.

The inlet point of line 9 in the reactor is situated just below the distribution grid 3 and the inlet direction of said line 9 is such to cause a "centrifugal effect" in the zone underlying the distribution grid 3.

According to an alternative embodiment the disengagement zone 4 can be also omitted, due to the particular design of the gas distributor 3, which reduces the risk of holes clogging by the fines entrained with the recycled gas.

The distribution grid 3 comprised in the reactor of the invention is supported by a plurality of bars 11 protuding from the bottom walls of the reactor in the zone underlying the distribution grid. In correspondence of the center of the gas distributor 3 a circular opening 12 is provided through which the polymer granules can be removed from the fluidized bed continuously or discontinuously, the continuous mode being preferred. The opening 12 of the gas distributor 3 converges into a conduit 13 for discharging polymer particles from the reactor. The discharged particles are then fed to the degassing and extruding facilities (not shown).

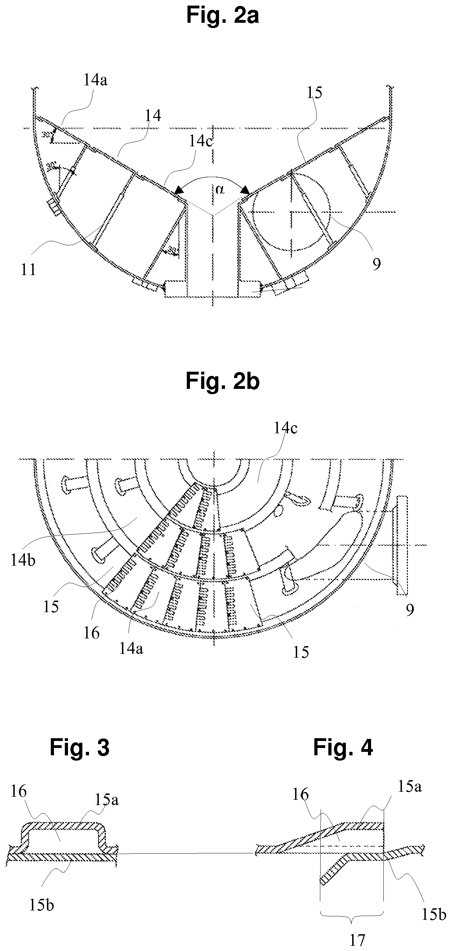

Figs. 2a and 2b show a more detailed view of the gas distribution grid 3 comprised in the reactor according to the invention. It can be seen from Fig. 2a that the gas distributor has the shape of the walls of a truncated cone, i.e. the form of a trapezium in cross section. The apex angle of the truncated cone in this embodiment is 120°.

The gas distributor comprises tree annular modules 14a, 14b, 14c of trays 15 connected to each other to form the lateral walls of said truncated cone. The annular modules 14a, 14b, 14c consist of trays 15 in form of plates mounted on annular supports in a way that each tray is connected with two adjacent trays. The annular modules are held supported by means of bars 11 protruding from the bottom wall of the reactor below the gas distribution grid.

If the trays are attached each other in a detachable way, it is very easy to assemble and disassemble the gas distributor comprised in the reactor of present invention or, to exchange some trays for maintenance reasons.

In the specific embodiment of Fig 2 the peripheral annular module 14a contains 44 trays, the medium annular module 14b contains 30 trays, and the inner annular module 14c contains 18 trays.

The number of slots 16 increases from the inner to the peripheral annular module in a way that the number of slots per area is kept essentially constant over the grid. The modular design however allows an easy adaptation to any need by increasing or decreasing the number of trays in each annular module. In the specific embodiment of Fig. 2, each tray 15 comprises seven slots 16 of equal cross section.

The slots 16 are formed so as to give a gas outlet, which is tangential at the plane of two adjacent trays 15. In this way the slots 16 are able to generate a whirling, cyclonic motion of the gas stream above the gas distribution grid 3 mounted at the bottom of a fluidized bed reactor of Fig. 1.

As said, the fluidizing gas enters through the conduit 9 just below the distribution grid 3 and its direction of inlet is such to cause a "centrifugal effect" in the zone underlying the distribution grid 3. Moreover, the flow of gas entering through the conduit 9 has the same orientation of the slots 16 on the distribution grid 3, so as to favour the channeling of the gas into the slots 16.

Fig. 3 shows a radial section of a single slot 16, i.e. a section which is perpendicular to the direction of the gas flow passing through the slot 16.

The slot 16 is formed by the overlapping of two adjacent trays 15a and 15b. Each tray forms on a side the lower part of the slots and on the opposite side the upper part of the slots. This arrangement is essentially identical for all trays in the gas distributor. In detail, the upper end of the slot 16 is formed by a first tray 15a, the lower end of the slot 16 is formed by a second tray 15b fixed to the first tray 15a. The first tray 15a is deformed in a way to form slots 16 having an essentially rectangular cross section. The first tray 15a defines the top and the sides of the rectangular slot 16, while the second tray 15b defines the bottom side of the rectangular slot 16. The width of the slots 16 in this embodiment is more than the double of its height.

Fig. 4 shows a tangential section of the slot 16, i.e. a section which is oriented along the direction of the gas flow passing through the slot 16. Likewise it can be seen that the upper part of the slot 16 is formed by one tray, the lower part being formed by a successive tray.

The slots 16 essentially consist of three portions along the flow direction: an inlet portion, a central portion and an outlet portion. In the central portion the trays 15a and 15b are substantially parallel, the length of said central portion being higher than its height and its inclination with respect to the plane of the trays being essentially zero. The inlet portion has a narrowing height along the flow direction, while the outlet portion is slightly ascending and is formed only by the lower tray 15b. The axes of said slots 16 is tangential with respect to the plane of said trays 15a, 15b.

The inlet of each slot 16 is maintained clean by the inlet of the fluidizing gas coming from the recycle gas line of the reactor. Preferably the slots 16 arranged on the opposite sides of the same tray 15 are not lined, but staggered: in this way the gas continuously blown off from the upstream series of slots can maintain cleaned the areas between the slots in the downward series of slots.

The slots can have any shape, like a triangular, rectangular, half circular or circular shape, without being restricted to a particular shape. It is preferred to arrange slots having a substantially rectangular shape.

The slots are preferably equal in cross section and size. However, it is also possible to differentiate the cross section and size of the slots between the inner portion and the outer portion of the grid, close to the reactor wall. The length of the slots can be adjusted by increasing or decreasing the overlapping areas of adjacent trays. So a highly flexible arrangement is provided without having to adjust the thickness of the gas distributor itself or without providing caps over the slots of the grid. By choosing trays with slots of different shape or cross section the gas distributor can be easily adapted to different process conditions.

The distribution grid comprised in the reactor of the present invention can be successfully used in many apparatuses involving the fluidisation of polymer powder, and not necessarily implying the polymerization reaction of monomers. By way of an example, the distribution grid can be also mounted in the bottom part of a drier, in which the polymer particles to be dried are maintained in fluidisation conditions by the upward continuous flow of a hot drying gas, such as nitrogen.

In particular, the use of the gas distributor comprised in the reactor according to the invention allows to obtain the following advantages:
1) The tangential outlet of the fluidizing gas from the slots generates a whirling motion in the polymer bed close to the fluidization grid with consequent minimization of hot spots in the lower portion of the fluidization bed. Said whirling, cyclonic motion of the gas flow also contributes to improve the homogeneity of the gas distribution inside the fluidized polymer bed;
2) The inclination of the slots, with respect the vertical axes of the vessel or reactor, prevents the polymer particle from penetrating deeply into the slots, so that the risk of clogging the distribution grid is negligible;
3) Different from the prior art arrangements the peripheral portion of the distribution grid is continuously impinged by the tangential flow of gas exiting from the slots: as a consequence, solid deposits can be remarkably reduced (minimization of hot spots) in said peripheral portion.

When fitted to the bottom of a fluidised bed reactor for the olefin polymerization, the distribution grid is capable of achieving an optimal distribution of gaseous monomers inside the fluidised polymer bed, so that a continuous and reliable polymerization process is ensured overcoming the drawbacks of the prior art gas distributors.

With reference to the apparatus of Fig. 1, the gas distribution grid 3 has a conical shape surrounding the inlet 12 of a discharge conduit 13 used to discharge the polymer particles from the reactor 1. Preferably the inlet 12 of the discharge conduit 13 is placed at the center of the distribution grid 3.

The discharge conduit 13 comprises regulation means 18, such as a discharge valve, suitable for adjusting the mass flow rate of polymer discharged from the reactor 1. The opening of the discharge valve 18 is continuously adjusted, so as to keep constant the height of the fluidized polymer bed inside the reactor.

The discharge conduit 13 may be made of a uniform diameter, but preferably comprises more sections having decreasing diameters in the downward direction. The control valve 18 is preferably placed in correspondence of a restriction between a section of higher diameter and a section of lower diameter as shown in Fig. 1.

The fluidized bed reactor of Fig. 1 according to the present invention and provided with the gas distribution is particularly suitable to be industrially exploited in a continuous process for the gas-phase polymerization of one or more olefin monomers of formula CH₂=CHR, where R is hydrogen or a hydrocarbon radical having 1-12 carbon atoms. Optionally, the gas-phase polymerization can be carried out in the presence of one or more C₂-C₈ alkanes, or cycloalkanes, as inert condensable gases.

It is therefore another object of the present invention a gas-phase process for polymerizing one or more α-olefins in a fluidized bed reactor in the presence of a polymerization catalyst, said fluidized bed reactor being equipped with a fluidization grid arranged at its base, a gas circulation system for cooling and recycling the unreacted gas from the top of said reactor to the distribution grid, the process being characterized in that said unreacted gas continuously flows through the slots of a distribution grid comprising a plurality of trays arranged to form the lateral walls of an inverted cone, said plurality of trays being attached each other to form said slots in the overlapping area of adjacent trays, wherein annular modules of trays are formed by the overlapping of successive trays, and wherein said slots are formed so as to give a gas outlet which is tangential at the plane of adjacent trays, thereby generating a whirling, cyclonic motion of the gas stream above the gas distribution grid.

The produced polyolefin is continuously discharged from the fluidized bed reactor 1 by means of a discharge conduit 13 protruding from the apex of said inverted cone formed by the arrangement of said plurality of trays.

The discharge conduit 13 conveys the discharged polyolefin to a separation tank (not shown), where the obtained polymer is separated from the unreacted monomers and inert gaseous compounds, said separated gaseous components being continuously recycled to the fluidized bed reactor 1.

The polymerization conditions are those conventionally adopted in gas-phase reactors for the olefin polymerization, that is to say a temperature ranging from 60 to 120°C and a pressure ranging from 5 to 40 bar.

The gas-phase polymerization process of the invention can be combined with conventional technologies operated in slurry, in bulk, or in a gas-phase, to carry out a sequential multistage polymerization process. Therefore, upstream or downstream the polymerization apparatus of the invention, one or more polymerization stages operating in a loop reactor, or in a conventional fluidized bed reactor, or in a stirred bed reactor, can be provided. In particular, gas-phase polymerization reactors having interconnected polymerization zones as described in EP 782 587 and EP 1012195 can be advantageously arranged upstream or downstream the apparatus of the present invention.

The gas-phase polymerization process allows the preparation of a large number of olefin powders having an optimal particle size distribution with a low content of fines. The α-olefins preferably polymerized by the process of the invention have formula CH₂=CHR, where R is hydrogen or a hydrocarbon radical having 1-12 carbon atoms. Examples of polymers that can be obtained are:
- high-density polyethylenes (HDPEs having relative densities higher than 0.940) including ethylene homopolymers and ethylene copolymers with α-olefins having 3 to 12 carbon atoms;
- linear polyethylenes of low density (LLDPEs having relative densities lower than 0.940) and of very low density and ultra low density (VLDPEs and ULDPEs having relative densities lower than 0.920 down to 0.880) consisting of ethylene copolymers with one or more α-olefins having 3 to 12 carbon atoms;
- elastomeric terpolymers of ethylene and propylene with minor proportions of diene or elastomeric copolymers of ethylene and propylene with a content of units derived from ethylene of between about 30 and 70% by weight;
- isotactic polypropylene and crystalline copolymers of propylene and ethylene and/or other α-olefins having a content of units derived from propylene of more than 85% by weight;
- isotactic copolymers of propylene and α-olefins, such as 1-butene, with an α-olefin content of up to 30% by weight;
- impact-resistant propylene polymers obtained by sequential polymerisation of propylene and mixtures of propylene with ethylene containing up to 30% by weight of ethylene;
- atactic polypropylene and amorphous copolymers of propylene and ethylene and/or other α-olefins containing more than 70% by weight of units derived from propylene.

The gas-phase polymerization process herewith described is not restricted to the use of any particular family of polymerization catalysts. The invention is useful in any exothermic polymerization reaction employing any catalyst, whether it is supported or unsupported, and regardless of whether it is in pre-polymerized form.

The polymerization reaction can be carried out in the presence of highly active catalytic systems, such as Ziegler-Natta catalysts, single site catalysts, chromium-based catalysts, vanadium-based catalysts.

A Ziegler-Natta catalyst system comprises the catalysts obtained by the reaction of a transition metal compound of groups 4 to 10 of the Periodic Table of Elements (new notation) with an organometallic compound of group 1, 2, or 13 of the Periodic Table of element.

In particular, the transition metal compound can be selected among compounds of Ti, V, Zr, Cr, and Hf. Preferred compounds are those of formula Ti(OR)ₙX_{y-n} in which n is comprised between 0 and y; y is the valence of titanium; X is halogen and R is a hydrocarbon group having 1-10 carbon atoms or a COR group. Among them, particularly preferred are titanium compounds having at least one Ti-halogen bond such as titanium tetrahalides or halogenalcoholates.

Preferred specific titanium compounds are TiCl₃, TiCl₄, Ti(OBu)₄, Ti(OBu)Cl₃, Ti(OBu)₂Cl₂, Ti(OBu)₃Cl.

Preferred organometallic compounds are the organo-Al compounds and in particular Al-alkyl compounds. The alkyl-Al compound is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides such as AlEt₂Cl and Al₂Et₃Cl₃ optionally in mixture with said trialkyl aluminum compounds.

Particularly suitable high yield ZN catalysts are those wherein the titanium compound is supported on magnesium halide in active form which is preferably MgCl₂ in active form.

Particularly for the preparation crystalline polymers of CH₂CHR olefins, where R is a C1 C10 hydrocarbon group, internal electron donor compounds can be supported on the MgCl₂.

Typically, they can be selected among esters, ethers, amines, and ketones. In particular, the use of compounds belonging to 1,3-diethers, cyclic ethers, phthalates, benzoates, acetates and succinates is preferred.

When it is desired to obtain a highly isotactic crystalline polypropylene, it is advisable to use, besides the electron-donor present in the solid catalytic component, an external electron-donor (ED) added to the aluminium alkyl co-catalyst component or to the polymerization reactor.

These external electron donors can be selected among alcohols, glycols, esters, ketones, amines, amides, nitriles, alkoxysilanes and ethers. The electron donor compounds (ED) can be used alone or in mixture with each other. Preferably the ED compound is selected among aliphatic ethers, esters and alkoxysilanes. Preferred ethers are the C2-C20 aliphatic ethers and in particular the cyclic ethers preferably having 3-5 carbon atoms, such as tetrahydrofurane (THF), dioxane.

Other useful catalysts are the vanadium-based catalysts, which comprise the reaction product of a vanadium compound with an aluminum compound, optionally in the presence of a halogenated organic compound. Optionally the vanadium compound can be supported on an inorganic carrier, such as silica, alumina, magnesium chloride. Suitable vanadium compounds are VCl₄, VCl₃, VOCl₃, vanadium acetyl acetonate.

Other useful catalysts are those based on chromium compounds, such as chromium oxide on silica, also known as Phillips catalysts.

Other useful catalysts are single site catalysts, for instance metallocene-based catalyst systems comprising at least a transition metal compound containing at least one π bond and at least an alumoxane or a compound able to form an alkylmetallocene cation.

The catalyst may suitably be employed in the form of a pre-polymer powder prepared beforehand during a pre-polymerization stage with the aid of a catalyst as described above.

The pre-polymerization may be carried out by any suitable process, for example, polymerization in a liquid hydrocarbon diluent or in the gas phase using a batch process, a semi-continuous process or a continuous process.

## Claims

1. A fluidized bed reactor for the gas-phase polymerization of α-olefins, said fluidized bed reactor being equipped with a gas distribution grid arranged at its base, a gas circulation system for recycling and cooling the unreacted gas from the top of said reactor to said distribution grid, and a conduit for the continuous discharge of polymer from the reactor, **characterized in that** said distribution grid comprises a plurality of trays arranged to form the lateral walls of an inverted cone, said plurality of trays being attached each other to form slots in the overlapping area of adjacent trays, wherein annular modules of trays are formed by the overlapping of successive trays, and wherein said slots are formed so as to give a gas outlet which is tangential at the plane of said adjacent trays, thereby generating a whirling, cyclonic motion of the gas stream above the gas distribution grid.

2. The fluidized bed reactor according to claim 1, wherein the inlet of said conduit for the polymer discharge is placed at the center of said distribution grid.

3. The fluidized bed reactor according to claim 1, wherein said annular modules of trays are supported by means of bars protruding from the bottom wall of said fluidized bed reactor.

4. A gas-phase process for polymerizing one or more α-olefins in a fluidized bed reactor in the presence of a polymerization catalyst, said fluidized bed reactor being equipped with a fluidization grid arranged at its base, a gas circulation system for cooling and recycling the unreacted gas from the top of said reactor to the distribution grid, the process being **characterized in that** said unreacted gas continuously flows through the slots of a distribution grid comprising a plurality of trays arranged to form the lateral walls of an inverted cone, said plurality of trays being attached each other to form said slots in the overlapping area of adjacent trays, wherein annular modules of trays are formed by the overlapping of successive trays, and wherein said slots are formed so as to give a gas outlet which is tangential at the plane of adjacent trays, thereby generating a whirling, cyclonic motion of the gas stream above the gas distribution grid.

5. The process according to claim 4, wherein the polymer is continuously discharged from the reactor by means of a discharge conduit protruding from the apex of said inverted cone.

## Patentansprüche

1. Wirbelschichtreaktor für die Gasphasenpolymerisation von α-Olefinen, wobei der Wirbelschichtreaktor mit einem Gasverteilerboden, der an seiner Basis angeordnet ist, einem Gaszirkulationssystem zur Rückführung und Kühlung des nicht-umgesetzten Gases aus dem obersten Bereich des Reaktors zu der Verteilungsplatte und einer Rohrleitung zum kontinuierlichen Austrag von Polymer aus dem Reaktor ausgestattet ist, **dadurch gekennzeichnet, dass** die Verteilungsplatte eine Vielzahl von Platten umfasst, die angeordnet sind, um die seitlichen Wände eines umgedrehten Kegels zu bilden, wobei die Vielzahl von Platten aneinander befestigt ist, um in dem überlappenden Bereich von benachbarten Platten Schlitze zu bilden, wobei ringförmige Module von Platten durch das Überlappen aufeinander folgender Platten gebildet werden, und wobei die Schlitze so gebildet werden, dass sie einen Gasauslass ergeben, der zu der Ebene der benachbarten Platten tangential ist, wodurch eine strudelnde zyklonartige Bewegung des Gasstroms oberhalb des Gasverteilerbodens erzeugt wird.

2. Wirbelschichtreaktor nach Anspruch 1, wobei der Einlass der Rohrleitung für den Polymeraustrag in der Mitte der Verteilungsplatte platziert ist.

3. Wirbelschichtreaktor nach Anspruch 1, wobei die ringförmigen Module von Platten mittels Stäben gehalten werden, die aus der Bodenwand des Wirbelschichtreaktors ragen.

4. Gasphasenprozess zum Polymerisieren von einem oder mehreren α-Olefinen in einem Wirbelschichtreaktor in Gegenwart eines Polymerisationskatalysators, wobei der Wirbelschichtreaktor mit einer Verwirbelungsplatte, die an seiner Basis angeordnet ist, einem Gaszirkulationssystem zur Kühlung und Rückführung des nicht-umgesetzten Gases aus dem obersten Bereich des Reaktors zu der Verteilungsplatte ausgestattet ist, wobei der Prozess **dadurch gekennzeichnet ist, dass** das nicht-umgesetzte Gas kontinuierlich durch die Schlitze einer Verteilungsplatte fließt, die eine Vielzahl von Platten umfasst, die angeordnet sind, um die seitlichen Wände eines umgedrehten Kegels zu bilden, wobei die Vielzahl von Platten aneinander befestigt ist, um in dem überlappenden Bereich von benachbarten Platten Schlitze zu bilden, wobei ringförmige Module von Platten durch das Überlappen aufeinander folgender Platten gebildet werden, und wobei die Schlitze so gebildet werden, dass sie einen Gasauslass ergeben, der zu der Ebene der benachbarten Platten tangential ist, wodurch eine strudelnde zyklonartige Bewegung des Gasstroms oberhalb des Gasverteilerbodens erzeugt wird.

5. Prozess nach Anspruch 4, wobei das Polymer kontinuierlich mittels einer Austragsrohrleitung, die aus dem Gipfelpunkt des umgedrehten Kegels ragt, aus dem Reaktor ausgetragen wird.

## Revendications

1. Réacteur à lit fluidisé pour la polymérisation en phase gazeuse d'α-oléfines, ledit réacteur à lit fluidisé étant équipé d'une grille de distribution de gaz disposée au niveau de sa base, d'un système de circulation de gaz pour recycler et refroidir le gaz n'ayant pas réagi de la partie supérieure dudit réacteur à ladite grille de distribution, et d'un conduit pour l'évacuation continue de polymère à partir du réacteur, **caractérisé en ce que** ladite grille de distribution comprend une pluralité de plateaux agencés pour former les parois latérales d'un cône inversé, les différents plateaux étant fixés les uns aux autres pour former des fentes dans la zone de chevauchement de plateaux adjacents, des modules annulaires de plateaux étant formés par le chevauchement de plateaux successifs, et lesdites fentes étant formées de manière à donner une sortie de gaz qui est tangentielle au niveau du plan desdits plateaux adjacents, permettant ainsi de générer un mouvement tourbillonnaire cyclonique du courant de gaz au-dessus de la grille de distribution de gaz.

2. Réacteur à lit fluidisé selon la revendication 1, dans lequel l'entrée dudit conduit pour l'évacuation de polymère est placée au centre de ladite grille de distribution.

3. Réacteur à lit fluidisé selon la revendication 1, dans lequel lesdits modules annulaires de plateaux sont supportés au moyen de barres faisant saillie à partir de la paroi inférieure dudit réacteur à lit fluidisé.

4. Procédé en phase gazeuse pour la polymérisation d'une ou de plusieurs α-oléfines dans un réacteur à lit fluidisé en présence d'un catalyseur de polymérisation, ledit réacteur à lit fluidisé étant équipé d'une grille de fluidisation disposée au niveau de sa base, d'un système de circulation de gaz pour refroidir et recycler le gaz n'ayant pas réagi de la partie supérieure dudit réacteur à la grille de distribution, le procédé étant **caractérisé en ce que** ledit gaz n'ayant pas réagi s'écoule en continu à travers les fentes d'une grille de distribution comprenant une pluralité de plateaux agencés pour former les parois latérales d'un cône inversé, les différents plateaux étant fixés les uns aux autres pour former lesdites fentes dans la zone de chevauchement de plateaux adjacents, des modules annulaires de plateaux étant formés par le chevauchement de plateaux successifs, et lesdites fentes étant formées de manière à donner une sortie de gaz qui est tangentielle au niveau du plan de plateaux adjacents, permettant ainsi de générer un mouvement tourbillonnaire cyclonique du courant de gaz au-dessus de la grille de distribution de gaz.

5. Procédé selon la revendication 4, dans lequel le polymère est évacué en continu du réacteur au moyen d'un conduit d'évacuation faisant saillie à partir du sommet dudit cône inversé.
